# EUROPEAN PATENT APPLICATION

(11) **EP 4 223 445 A1**
(43) Date of publication of application: **09.08.2023**
(21) Application number: 22425003.5
(22) Date of filing: 03.02.2022
(51) Int. Cl.: B23K 11/11, B23K 37/02, B23K 11/31

(54) **METHOD FOR ADAPTIVE CONTROL OF A WELDING GUN TRAVELING ELECTRODE**

(71) Applicant: Diakont S.r.l., 50025 Montespertoli (FI) (IT)
(72) Inventor: Fedosovskiy, Mikhail, 197022 Saint Petersburg (RU); Dunaev, Vadim, 195220 Saint Petersburg (RU); Sedunov, Dmitrii, 194355 Saint Petersburg (RU); Kushbasov, Asylkhan, 195256 Saint Petersburg (RU); Zhiltsova, Darja, 196240 Saint Petersburg (RU)
(74) Representative: Emmi, Mario

(57) **Abstract**

Claimed is a method for adaptive control of the traveling electrode of a C-type, X-type or Pinch type spot welding gun. According to the method, the traveling electrode of the welding gun moves at a speed (V₀) when performing a welding (working) cycle and switches to the speed (V₁) at the point, the coordinate of which is calculated based on the point of contact of the electrodes coordinate obtained at the configuration cycle performed before the working cycle. The method allows for reduction in the welding cycle time.

## Description

### FIELD OF THE INVENTION

The present invention relates to the field of resistance spot welding and, in particular, to a method for adaptive control of a traveling electrode for a C-type, X-type or Pinch-type welding gun for a spot welding system.

### BACKGROUND OF THE INVENTION

Resistance spot welding is widely used in the industry. For example, spot welding is used to join metal body parts of a vehicle. For such welding with a spot welding gun, generally having a traveling electrode and a fixed electrode, two or more overlapping parts to be welded are clamped between said electrodes, and then electric current is passed through the electrodes and the parts. The current causes local heating and melting of the metal at the clamped area of the parts, which forms a weld nugget. After the welding current is no longer supplied, the metal cools down and hardens at the weld nugget, and the parts become joined.

There is a need in reducing the welding cycle to increase the output capacity of processing lines with spot welding. Regarding a vehicle plant, reducing of the welding cycle allows for increase in performance of body welding line and welding cells, wherein the latter refers to areas where the part joining operation for manufacturing car bodies using resistance spot welding takes place.

EP0278185 discloses a method for resistance spot welding, which comprises moving of a welding gun traveling electrode is carried out by an electromechanical actuator (hereinafter - the EMA). The EMA comprises a synchronous electric motor and a roller-screw drive. The welding gun is fixed on the movable arm of an industrial manipulator (robot). The EMA is controlled by a control system which may be a frequency converter and a controller (a controller integrated into a frequency converter, *inter alia*)*.* During a welding cycle, a robot brings the welding gun to the parts to be welded such that said parts are located between the traveling electrode and the stationary electrode, and the stationary electrode touches one of the part to be welded. Then, the EMA moves the traveling electrode until it contacts the other part to be welded, and the compressive force acting on the parts to be welded builds up to the force suitable for welding.

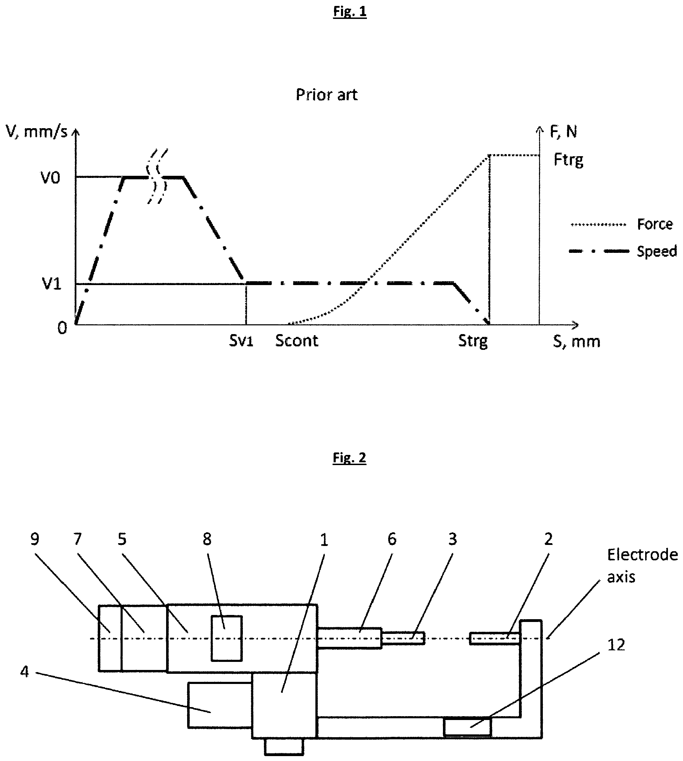

Fig. 1 shows the EMA speed against force dependence during a conventional cycle of compression for a welding gun in a welding cycle. In response to a command from the control system, the EMA performs a welding cycle by moving the traveling electrode: first, the traveling electrode is moved within a free movement portion (without the electrode contacting the parts to be welded) at a high speed (V₀), which is, e.g., equal to the highest EMA speed. Then the speed decreases to a low speed (V₁), and at the coordinate (SV₁) (which is the point where movement with the speed (V₁) has begun) the traveling electrode moves with a the speed (V₁) and contacts a part to be welded at a point (S_{cont}) (which is the point of actual contact of the traveling electrode with the part to be welded). The welding gun begins compression of the parts, and the compressive force increases until it reaches a target force (F_{trg}), to which the electrode coordinate (S_{trg}) corresponds ((F_{trg}) is the target force, with which the welding gun compress the parts to be welded and with which the parts welding takes place). At (S_{trg}) coordinate the electrode stops moving ((V₁) falls to 0), and the electrodes take the position for welding. (S_{trg}) coordinate depends on the rigidity of the welding gun with the EMA, since the rigidity influences the degree of the welding gun deformation during compression of the parts to be welded by the electrodes. Position of the traveling electrode is tracked by a control system using a position sensor arranged in the EMA.

The correspondence between the movement of the traveling electrode and the force on the electrodes is determined during the welding gun calibration by comparing the force measured by a force sensor arranged between the electrodes, and the position of the electrode received from the position sensor. Generally, in order to reduce the welding cycle time and to increase the capacity of the welding cell and, correspondingly, of a production line that comprises the welding cell, within the free movement portion the electrode moves with a maximum or close to maximum speed that the EMA can develop. After the arms of the welding gun are closed and the target force (F_{trg}) is reached, the welding controller, through a transformer mounted on the welding gun, sends welding current to the electrodes (welding current is not shown in the figures), thereby heating and melting the metal in a zone of contact between the caps, mounted at the ends of the electrodes, and the parts. This way, a weld nugget is formed, and after the metal cools down and hardens, the parts become joined in the weld nugget. The arms of the welding gun open, and a robot brings them to a next welding spot (the part of welding gun opening is not shown in the figures).

When the electrodes contact the parts to be welded, since the electrode collides with the part at a certain speed, force fluctuations (vibration) occur. These are decaying fluctuations. The vibration intensifies if, before compression, there was a gap between the parts due to irregularities of the parts and the method they are held relative to each other. The gap between the parts reduces their overall rigidity. In known current-mode welding gun control methods, force fluctuations may cause errors upon reaching the target force at which the parts are to be welded, and additional time losses may occur due to the need of damping the force fluctuations. It increases the total welding cycle time and reduces the capacity of equipment (a welding cell). In order to reduce the amplitude of the fluctuations and duration of the fluctuation decay, as well as their effect on the rate of reaching the welding force, the electrode slows down a certain distance before the electrodes contact the parts to be welded. The caps at the ends of the electrodes are subject to wear during the welding cycles, since they are heated to high temperatures, and material is gradually removed from their surface, and since the caps are pressed by the force of the parts compression. The wear results in a change in the cap length and the size of the contact area, which affects contact resistance, temperature in the welding zone and, correspondingly, welding quality.

It should be noted that a procedure of restoring the cap shape, i.e. cap sharpening (tip dressing), is performed at certain time intervals (according to a schedule) based on the average wear, since various forces and welding currents can be used at welding spots depending on the thickness of the parts to be welded and the grade of material thereof, which means that the caps have different wear in such welding spots. The shape of the caps may be restored by any other known method. When a welding cycle is being configured, the deceleration point (SV₁) is chosen based on the maximum initial size of the caps, and therefore, in the case of the cap wear, the electrode stroke until it contacts the corresponding part is increased, which results in further loss of time. It should be noted that the thickness of the parts to be welded can vary within tolerance. There may be a gap between the parts to be welded due to uneven surfaces of such parts, wherein the gap can vary from zero to maximum in different cycles. Usually, the electrodes start to slow down at a distance that would be certainly greater than the maximum thickness of the parts and the gap between them to avoid collision of the traveling electrode with the parts at a high speed and damaging thereof. Thus, the traveling electrode passes a sufficiently long distance at the speed (V₁), which increases the welding cycle duration. In order to reduce the welding cycle duration, the speed of the traveling electrode should be lowered the speed (V₁) as close to the point of contact as possible. However, the point of contact may be shifted due to wear of the caps, the existence of a gap between parts, deviation of the thickness of the parts to be welded within tolerance. Accordingly, to ensure that the distance where the electrode starts moving at the speed (V₁) is constant from cycle to cycle, a point, from which this distance is measured, should be determined prior to each welding cycle. Said point may be referred to as (S_{cont}).

US8426761B2 discloses a method for determining an electrode contact point based on a point in time when the strength of current consumed by the EMA electric motor (torque generated by the EMA) begins to change, and on the amount of change of the consumed current. The current consumed at the portion of the path the traveling electrode passes until it contacts the parts (free movement portion) varies in a certain range. The current fluctuation is, *inter alia*, due to the fact that the EMA synchronous electric motor with the rotor and permanent magnets has torque impulses that are caused by cogging torque. Furthermore, the current fluctuation is caused by varying friction between the EMA parts, for example, friction between parts of a mechanism for transforming rotary movement of the EMA rotor into translational movement of the EMA shaft and the guides of the shaft, through the length of the traveling electrode stroke, or friction between the parts of an anti-rotation assembly, which is required since the EMA shaft, having a gear for transforming the rotary movement of the rotor into translational movement of the screw-and-nut type of the shaft, a ball screw drive or a roller screw drive tends to rotate along with the EMA rotor. Such an anti-rotation assembly is mounted inside the EMA, but it can be provided in the form of a guide mounted on the welding gun and having a carriage attached to the EMA shaft or to the welding gun traveling electrode and configured for moving along the guide. Inconsistent friction between the parts results from imperfection of shapes of the contacting parts, which arises from their manufacturing tolerances, irregularly distributed lubricant across their surface, as well as from other factors. Besides, the parts to be welded may not fit tightly against each other, which leads to inconsistent determination of a contact point from cycle to cycle - the amplitude of fluctuations that occur when the electrodes collide with the parts and the decay time thereof are greater when there is a gap than when there is none. The current consumed at the time the traveling electrode contacts the parts also oscillates and has a varying amplitude depending on the size of the gap, which may lead to the change of the current for a pre-determined amount after the contact of the electrodes with the parts to be welded at a different distance from the point of contact. Thus, a contact point determined according to this method will be at a different distance from the point of actual contact from cycle to cycle.

Consequently, a disadvantage of the known method is low consistency in determining the contact point, and, therefore, inefficiency in using the latter as the point (S_{cont}), at a distance from which, at (SV₁) point, the traveling electrode starts moving at speed (V₁), since in order to avoid false determination of the contact point, the value of the change of the current, based on which value the contact of the electrodes with the parts to be welded will be determined, should be set sufficiently high, in particular, higher than the amplitude of current fluctuations. Setting the current change value higher than the current fluctuation amplitude will result in that the actual contact will occur much earlier than in the point of contact determined according to the known method, which requires that the distance from the point of beginning of the lower speed movement to the point of contact of the electrodes be increased by a value of contact point determination potential error in order to avoid collision of the electrodes with the parts to be welded at high speed and to prevent the damage thereof.

US8983786B2 discloses a method for determining a point of contact between a welding gun electrode and parts to be welded by determining a coordinate of an intersection of a straight line of time-tracking-error function with a zero tracking error level. This method has low consistency and repeatability due to the fact that the straight line of time-tracking-error function is built on several points, the fluctuation of which from cycle to cycle is random and depends on numerous factors that vary during operation. These factors influence both the current consumed by the electric motor, which is necessary for moving the electrode, and the operation of corresponding control circuits, such as a position circuit, which affects the tracking error level. These factors are the electric motor temperature, the condition of the lubricant, the amount of wear of the movable elements of the mechanism. The fluctuations of the points cause the straight line plotted through these points to intersect the zero tracking error level at different points, and, therefore, the point of contact between the electrode and the parts to be welded is determined with an error. Before contacting the parts to be welded, at the moment of the contact and during the force building-up, the electrode moves with a certain speed, and therefore the tracking error cannot be zero. Thus, the point of intersection between the straight line of the time-tracking-error function and the zero tracking error level will be shifted relative to the point of intersection between the tracking error line and the tracking error level that existed before the moment the traveling electrode contacted the parts. It should be noted that in order to determine that the tracking error is at zero (or has a different constant value) before the traveling electrode contacts the parts to be welded, the electrode needs to be moving over a certain time at constant speed up to the moment of contact with the parts, which increases the duration of the welding cycle.

To reduce the contact point determination error, a force sensor may be mounted on the welding gun, the force sensor being configured to control the force proportional to the force on the welding gun electrode. The force sensor can be positioned, for example, in the EMA or on the welding gun. Hereinafter in the present application, the force on the force sensor is taken for the force proportional to the force on the electrode, wherein the proportion can be determined by known methods, such as by welding gun calibration, where the welding gun compresses another force sensor located between the electrodes, and the correspondence between the force on the welding gun force sensor and the force on the force sensor located between the electrodes is determined. When the force sensor is present, the force on the welding gun is controlled during the movement of the electrode and during its contact with the parts to be welded, and the point of contact is determined based on the moment when the force on the force sensor begins to increase. It should be noted that force sensors, in the measurement zone near zero, typically have a dead zone or an increased error zone, which reduces accuracy of the contact point determination. To avoid this, force sensors can be located in the EMA and can be preliminarily compressed by the EMA structural element so that the force on the force sensor is not zero, and, thus, the force sensor signal is not zero. A further negative factor is force fluctuations that occur when the electrodes collide with the parts to be welded, as mentioned above. The force fluctuations would also be sensed by the force sensor, and the force value corresponding to the actual electrode contact point will be determined with reduced accuracy, since, due to the fluctuations, a wrong coordinate will be correlated with the point where the force starts to increase. It should be noted that at the point where the electrodes begin to compress the parts to be welded, not only gaps between the parts are taken up at first, but also gaps in joints of the welding gun movable elements, such as guides and hinges of the traveling electrode, as well as gaps in the EMA gear. Among other things, it causes the ratio between the force change and the path covered by the electrode after the beginning of the parts compression to be non-linear (non-linear portion of increase in force in Fig.1). The non-linearity of the force increase is also caused by the fact that immediately after the electrodes contact the parts to be welded, they move towards each other, thus correcting the unevenness of the parts which are usually significantly less rigid than the welding gun, which unevenness prevents them from fitting tightly. Thus, a relatively large force value set as a criterion for reaching the point of contact between the electrodes and the parts avoids false contact point determination, which results in that, in most cases, the actual electrode contact point is earlier than the point, which is considered to be the electrode contact point according to the disclosed method. Meanwhile, the non-linear nature of the ratio between the force change and the path covered, which depends on the size of the gap, is not the same from cycle to cycle, which does not allow for consistent contact point determination based on a change of the amount of force change (by comparing the ratio between the force change and the path covered to a predetermined value which may be set as a criterion for a contact between the electrodes and the parts to be welded) when the parts to be welded are compressed. Thus, the distance between the point where the low-speed movement begins and the points of electrode contact increases by the value of the electrode contact point determination error according to the disclosed method, which increases the duration of a welding cycle. After the parts to be welded contact and fit tightly against each other, their rigidities have virtually no effect on the compressive force, and linear growth cycle starts (Fig. 1).

It should be noted that in order to decrease the duration of a welding cycle, it is most beneficial to set the point of contact of the electrode with the part as the point where the electrode begins to move with low speed (V₁). In this case, the known methods cannot prevent a collision between the electrode and the part at high speed (V₀), and, therefore, said methods make impossible the use of the point of contact of the electrode with the part as the point where the electrode begins to move with low speed (V₁) for reduction of the welding cycle duration.

Therefore, there is a need for a method for controlling a spot welding gun, which will allow for reduced duration of a welding cycle.

### SUMMARY OF THE INVENTION

It is an object of the present invention to provide a method for adaptive control of the traveling electrode of a spot welding gun, which method can reduce the welding cycle time and to avoid damaging the parts to be welded and the welding gun.

To accomplish the above object proposed is a method for adaptive control of a traveling electrode of a spot welding gun, the welding gun comprises:
a pair of electrodes at least one of which is the traveling electrode;
a linear actuator for the traveling electrode, the linear actuator being arranged for linear movement of the traveling electrode towards the another electrode of the pair of electrodes;
a position sensor arranged for sensing the position of the traveling electrode;
a force sensor arranged for sensing a force acting on the traveling electrode;
input/output means for working parameters input;
a controller configured for receiving data via the input/output means, as well as data from the position sensor and the force sensor, for storing and processing said data and for outputting control signals for controlling the traveling electrode linear actuator;
wherein according to the method:
   a cycle of the welding gun configuration is performed, wherein the cycle comprises:
setting working parameters including the values of speed (V₀) of the traveling electrode movement, and speed (V₁) of the traveling electrode movement; first and second compressive forces (F₁, F₂) of the electrodes; target force (F_{trg}); a distance A, equal to the maximum thickness of the parts to be welded, including tolerance, wherein the second compressive force (F₂) is less than the target force (F_{trg}), at which welding of the parts to be welded is performed, and wherein the first compressive force (F₁) is greater than the force at which force fluctuation, caused by touching of the electrodes to each other, finishes;
bringing the traveling electrode to the other electrode of the pair of electrodes at speed (V₁) without contacting the electrodes with each other;
bringing the electrodes in contact with each other and further moving the electrodes towards each other to reach the first compressive force (F₁);
building up the compressive force by moving the traveling electrode at speed (V₁) until the second compressive force (F₂) is reached, after which the speed of movement of the traveling electrode is lowered;
lowering the speed of movement of the traveling electrode until the target force (F_{trg}) is reached,
the method is characterized in that:
   after the second compressive force (F₂) is reached, a coordinate of a base point (S_{base}) at which the electrodes touch each other is determined as a point of intersection of a linear function defining correspondence between the electrode compression force and the coordinate of the traveling electrode during the building-up of the force from the first compressive force (F₁) to the second compressive force (F₂), with the level of zero compressive force;
wherein the method further comprises:
   working cycle of the welding gun compression, when the parts to be welded are positioned between the electrodes of the welding gun; the working cycle comprises:
   bringing the traveling electrode to the parts to be welded at speed (V₀) without contacting the electrodes with the parts;
   lowering the speed of the traveling electrode movement from speed (V₀);
   bringing the traveling electrode in contact with the nearest part to be welded;
   lowering the speed of the traveling electrode movement to the preset speed (V₁) at the distance A from the base point (S_{base}) at which the electrodes touch each other;
   reaching the first compressive force (F₁);
   building up the part compression force with the movement of the traveling electrode at speed (V₁) to reach the second compressive force (F₂), after which the speed of the traveling electrode movement is lowered;
   lowering the speed of the traveling electrode until the target force (F_{trg}) is reached;
   after the second compressive force (F₂) is reached, a coordinate of a point (S_{touch}) at which the traveling electrode touches the part to be welded is determined as a point of intersection of a linear function defining correspondence between the parts compression force and the coordinate of the traveling electrode during the building-up of the force from the first compressive force (F₁) to the second compressive force (F₂) , with the level of zero compression force, and
   setting a coordinate of the point at which the traveling electrode begins movement at speed (V₁) during the next working cycle of compression, the coordinate is being equal to the coordinate of the point (S_{touch}) at which the traveling electrode touches the part to be welded, determined during the performed working cycle of welding gun compression.

Having the coordinate of the point where the electrode begins moving with the speed (V₁) in a working compression cycle to be equal to the coordinate of the contact point of the electrodes, which is notably consistent in its determination because it is calculated on the basis of forces that exceed the force at which the force fluctuation, caused by collision of the electrodes with the parts to be welded, ends, reduces the duration of movement of the traveling electrode with low speed (V₁), increases the duration of movement of the traveling electrode with the maximum speed (V₀) and, thus, reduces the duration of a welding cycle and increases the welding cell capacity, at the same time the risk of collision of electrodes with the parts at the maximum speed (V₀) is eliminated.

Having the coordinate of the point where the electrode begins moving with the speed (V₁) in a current working compression cycle to be equal to the coordinate of the contact point of the electrodes determined in a previous welding cycle allows for making maximum provisions for the welding gun mechanism and EMA parameter changes during operation (for example, a change in rigidity resulting from heating).

Using a linear function representative of the welding gun rigidity instead of the rigidity determined as a ratio of the force to the corresponding movement of the traveling electrode during the welding gun elastic deformation increases the accuracy of contact reference point determination, since a linear function implies averaging the values of force and movement at a portion from the compression force (FF₁) to the force (F₂), thus partially compensating for the force measurement error.

Additionally, the method allows for avoiding welding the wrong number of parts, e.g., fewer than predetermined in the technological process, which may happen at semi-automatic production lines. At such lines, a human supplies parts to be welded, e.g., places them into the tooling where the parts are fixed for subsequent welding. Since the coordinate of the point where the electrodes contacted the parts in the previous welding cycle may be compared with the coordinate of the point where the electrodes contacted the parts in the current welding cycle before the welding current is supplied, it is possible to determine that the difference between the coordinates is greater than a predicted value, such as a predicted cap wear value, and to stop the welding cycle. In comparison to the known methods of contact point determination, the risk of a false determination of the number of the parts to be welded may be reduced by more accurate contact point determination. Thus, the risk of manufacturing defective products is reduced.

It is important that the suggested method provides for highly consistent determination of a point at which the traveling electrode starts moving with a speed (V₁), if the determination is carried out using a force sensor having a dead zone or an increased error zone near zero force due to determining a reference electrode contact point based on a force value that is greater than the force at which the force fluctuation, caused by collision of the electrodes with the parts to be welded, ends, which value is usually greater than the forces of the force sensor dead zone.

The suggested method allows for determining the wear rate of the caps by controlling the value of the change of the electrode contact point coordinate when the length of the caps decreases, predicting the position of the electrode contact point in a subsequent cycle that follows the current welding cycle, and setting the beginning of movement with the low speed (V₁) in the subsequent welding cycle at a fixed distance from the predicted reference electrode contact point, thus keeping the duration of movement with the speed (V₁) at a minimum.

According to one embodiment, the cycle of the welding gun (1) configuration further comprises:
determination of point of contact of the pair of electrodes (2, 3) before setting the working parameters, wherein prior to the contact of the electrodes (2, 3) to each other the method further comprises:
determination of the point (SV₁) based on the data on the point at which the electrodes (2, 3) contacting each other, (SV₁) is the point at which the speed (V₀) of the traveling electrode (3) movement lowers to the speed (V₁) of the traveling electrode (3) movement;
bringing the traveling electrode (3) to the other electrode (2) of the pair of electrodes (2, 3) at speed (V₀) without contacting of the electrodes (2, 3) with each other;
lowering the speed of the traveling electrode (3) movement to speed (V₁).

According to one embodiment, the distance from the base point (S_{base}) at which the electrodes touch each other to the coordinate of the point of beginning the movement of the traveling electrode at speed (V₁) further includes the distance equal to the maximum displacement of the parts to be welded along the axis of the traveling electrode, which prevents the traveling electrode from contacting one of the parts at a speed that can lead to impermissible damage to the surface of the part.

According to one embodiment, the distance from the base point (S_{base}) at which the electrodes touch each other to the coordinate of the point of beginning the movement of the traveling electrode at speed (V₁) further includes the distance equal to the maximum possible gap between the parts to be welded, which prevents the traveling electrode from contacting one of the parts at a speed that will damage the parts, the EMA and/or the welding gun.

According to one embodiment, the distance from the base point (S_{base}) at which the electrodes touch each other to the coordinate of the point of beginning the movement of the traveling electrode at speed (V₁) further includes the distance equal to the maximum possible thickness of the parts to be welded which are suitable for installation in the tooling, which prevents damage to the parts if an operator placed extra parts into the tooling holding the parts during welding.

According to one embodiment, the first compressive force (F₁) is corrected during the working cycle to ensure that the first compressive force (F₁) is greater than the force at which the non-linear portion of the force growth finishes, to increase the consistence of determination of the point at which the traveling electrode starts moving with the speed (V₁).

According to one embodiment, the first compressive force (F₁) and the second compressive force (F₂) are preset during the welding gun calibration, which beneficially combines welding gun configuration and determination of the forces (F₁) and (F₂), since the welding gun calibration requires compressing the welding gun in any case with a maximum operational force for the welding gun or this type. Thus, the duration of the welding gun configuration is reduced.

According to one embodiment, the speed (V₀) equals to the maximum speed of the welding gun traveling electrode linear actuator, which reduces the welding cycle duration.

According to one embodiment, the limiting value for the coordinate of the point (S_{touch}) at which the traveling electrode touches the part to be welded is set according to maximum permissible cap wear, which allows for determining and predicting a moment when a cap shape restoration procedure should be performed.

According to one embodiment, the traveling electrode linear actuator is implemented as an electromechanical actuator with a roller screw drive or a ball screw drive.

According to one embodiment, the traveling electrode linear actuator is implemented as a linear electric motor.

According to one embodiment, the position sensor is implemented as an encoder or resolver.

According to one embodiment, the controller is arranged in an electromechanical actuator.

According to one embodiment, the welding gun comprises another force sensor configured to sense the force arisen on the electrodes.

### BRIEF DESCRIPTION OF THE DRAWINGS

Fig. 1 shows plots of force and speed against the position in a welding cycle according to a prior art method, at portions where the traveling electrode moves at speed (V₀), at speed (V₁), and where compression of the electrodes reaching the target force is carried out.
Fig. 2 schematically shows a welding gun.
Fig. 3 schematically shows a robotic welding cell with industrial manipulators and a welding gun fixed thereto.
Fig. 4 shows plots of force and speed against the position in the configuration cycle and in the working cycle at portions where the traveling electrode moves at speed (V₁), compression of the electrodes and maintaining the target force.
Fig. 5 shows plots of force and speed against the position in the welding cycles according to proposed method and prior art method.

### DETAILED DESCRIPTION OF THE INVENTION

Fig. 2 shows a welding gun 1 of C-type which may be controlled by the proposed method. Similar C-type welding gun is described, for example, in EP1221351A1. The welding gun 1 comprises a stationary electrode 2 and a traveling electrode 3. A transformer 4 is mounted on the welding gun for supplying the electrodes 2 and 3 with the current for welding. A traveling electrode linear displacement mechanism, such as an electromechanical actuator (EMA) 5 with a roller screw drive is fixedly mounted on the welding gun 1 for moving the electrode 3. Similar EMA is described in US9520756B2. The electrode 3 is fixed on a shaft 6. The EMA 5 comprises an electric motor (not shown) having a rotor and a stator (not shown), a position sensor 7, a force sensor 8 and a mechanism for transforming rotary movement of the rotor into translational movement of the shaft 6 - a roller screw drive, although the suggested method can be implemented with the EMA 5 used with a ball screw drive or any other known mechanism of transforming rotary movement of the rotor into translational movement of the shaft. In order to prevent the shaft 6 and the electrode 3 from rotating along with the EMA 5 rotor during roller screw operation, the EMA 5 is provided with an anti-rotation assembly for reducing the mass and dimensions of the welding gun 1. Instead of an integrated anti-rotation assembly, the welding gun may be provided with an anti-rotation assembly in the form of a guide (not shown), for example. It should be noted that in addition to the disclosed example, the EMA 5 may be provided as a linear electric motor that does not require a mechanism for transforming rotary movement into translational movement of the shaft or as any other known EMA 5 configuration. The EMA 5 contains a controller 9 for controlling the EMA 5. Controller 9 comprises the processing unit (not shown) to process a data received from different sensors e.g. the force data from the force sensor 8 and the position data from the position sensor 7 in order to calculate the electrode 3 motion parameters (coordinates, speed and force) which are described further according to the present invention. The position sensor 7 may be an encoder or a resolver attached to the EMA 5 rotor and enables the controller 9 to track the position of the traveling electrode 3. In other embodiments, a controller 9 may be positioned as a separate unit, or the controller 9 may be combined with a robot controller 10 for controlling a robot 11. However, positioning the controller 9 within the EMA 5 beneficially reduces the number of conductors for electric installation when placing power and communication lines across the robot 11, since it is not required to place cables for a force sensor 8 across the robot 11 and, in other embodiments of the welding gun, for a force sensor 12 as well.

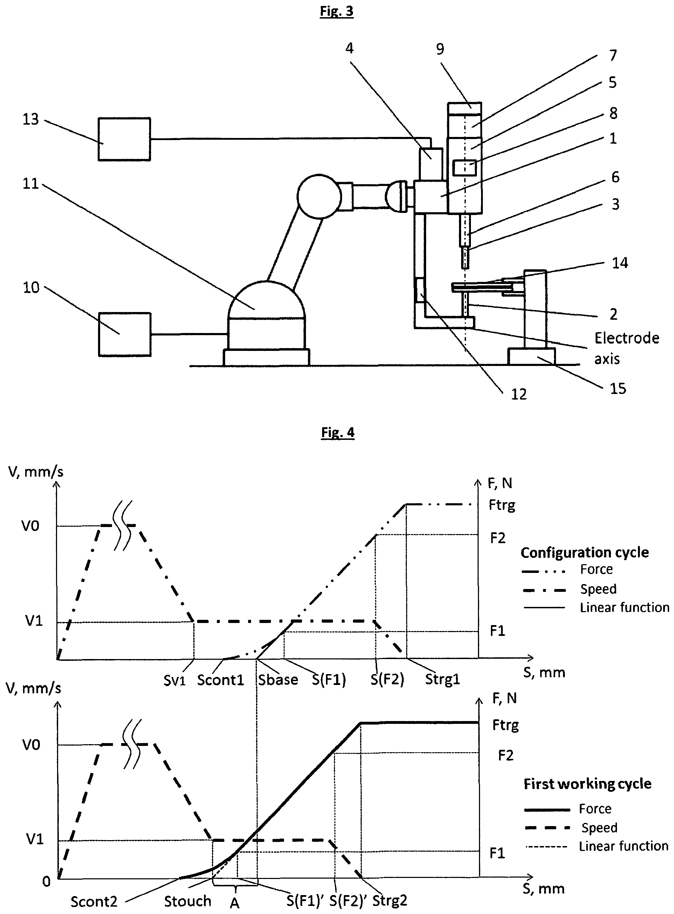

Fig. 3 schematically shows a robotic welding cell (hereinafter - a welding cell) comprising a robot 1 (an industrial manipulator) having 6 degrees of freedom, and a welding gun 1 fixed on the last movable arm of the robot. The welding cell further comprises a welding controller 13 for controlling a transformer 4 for supplying the electrodes 2 and 3 with the welding current. The controller 9, the robot controller 10 and the welding controller 13 are interconnected by communication lines (not shown) for exchanging "ready for operation" signals, operation initiation commands and operation completion commands. The robot 11 moves the welding gun 1 bringing the stationary electrode 2 to the parts 14 to be welded. The robot 11 brings the welding gun 1 such that the stationary electrode 2 touches at a right angle one of the parts 14 fixed in the tooling 15. The parts 14 to be welded may be in the form of at least two metal parts of an item, for example, parts of a vehicle body. There can be two or more parts 14 depending on the construction of the product. In response to a command from the controller 9, the EMA 5 moves the electrode 3 towards the parts 14 (i.e. the welding gun 1 closes) and compresses the parts 14 between the electrodes 2 and 3 with predetermined force. It should be noted that in response to a command from the robot controller 10, the robot 11 moves the welding gun 1 as the parts 14 are being compressed, and a distance of the movement equals to elastic deformation of the welding gun 1, which corresponds to the predetermined force, to avoid deforming the parts 14. In other words, the robot performs equalizing - a process of equalizing forces on both electrodes. In an embodiment, an EMA (not shown) is located between a movable arm of the robot 11 and the welding gun 1, wherein the EMA shaft axis (not shown) coincides with the axes of the electrodes 2 and 3. The EMA is fixed on the robot 11 arm, and the shaft of the EMA is fastened to the welding gun, e.g. to the frame thereof. The EMA moves the welding gun 1 a distance equal to elastic deformation of the welding gun 1 so that the robot 11 does not have to do this. The speed of the welding gun movement during equalizing shall coincide with speed (V₁). The distance passed during equalizing is called an equalizing amount. Equalizing helps to speed up a welding cycle due to the fact that said EMA operates faster than the robot 11 because of a much shorter response time. To increase equalizing accuracy, a force sensor 12 may be mounted on the welding gun 1 stationary electrode. In this case, the welding gun 1 can be moved up to a moment when force on the force sensor 8 and the force on the force sensor 12 are equal. After the parts 14 are compressed, a welding controller 13 supplies welding current through a transformer 4 mounted on the welding gun 1 to the electrodes 2 and 3, and the welding current melts the metal of the part 14 in the contact zone of the electrodes 2 and 3 and forms a weld nugget (not shown). After the welding current is no longer supplied by the EMA 3, the weld nugget cools down and the parts 14 become joined. Then, the EMA 5 moves the electrode 3 in a direction away from the parts 14 (i.e. welding gun opens), and the robot 11 moves the welding gun 1 to a next welding spot. In an embodiment of the welding cell, the welding gun 1 is fixedly attached, for example, on the floor, and the robot 1 has means for capturing the parts 14 and is configured for moving the parts 7 so as to position them between the electrodes 5 and 6. The welding cycle is performed in the same order as disclosed above, except that the robot 1, and not the welding gun 2, moves the parts 14.

Fig. 4 shows plots of force and speed against the position of the traveling electrode 3 in a welding cycle without a welding gun 1 opening portion, because the present invention does not relate to this part of a welding cycle. It is important, that to initially determine the point of touch of the electrodes 2 and 3 contact point, at a distance from which a point where the movement at low speed begins in the first working cycle including the welding of the parts 14 (see below), a welding gun 1 configuration cycle is performed (configuration cycle). Prior to the welding gun configuration cycle, the limiting coordinates of the electrode 3 movement are determined. The current coordinate of the electrode 3 is determined based on the position sensor 7 signal. The closing limiting coordinate is defined as a coordinate obtained by the addition of certain displacement to the point coordinate, where the electrodes 2 and 3 contact without generating force. This displacement exceeds the assumed curvature (deformation) of the welding gun 1 when force is generated between the electrodes 2 and 3 by the assumed cap wear value and some allowance which is necessary since the welding gun 1 curvature is slightly different in each part due to manufacturing tolerances. Thus, the closing limiting coordinate is beyond the point of contact of the electrodes 2 and 3 without exerting any force. Determination of the limiting coordinates is necessary to make possible for the controller 9 to stop the welding cycle if, for example, a cap (not shown) comes off the electrodes 2 or 3 (for example, because of its loose fit due to wear of the retaining cones on the electrodes 2 and 3), and these electrodes will travel a longer distance than expected before colliding with each other. The point of contact of the electrodes without exerting any force is determined by the operator moving the electrode 3 with an input/output means, such as a teach pendant or through another known human-machine interface (HMI) of the controller 9 at a low speed until the electrodes contact each other. After the electrodes contact, the operator assumes the current coordinate as the point from which the operator later sets the distance at which speed should be reduced to the speed (V₁) in the configuration cycle. This distance depends on the accuracy of determination of the point of contact of the electrodes 2 and 3 without generating force, and it is subtracted from the coordinate of the point of contact. Thus, the coordinate of the point (SV₁) (the point at which the speed is reduced to the lower speed (V₁) in the welding gun configuration cycle) is determined, wherein the controller 9 calculates the coordinate of the point (SV₁) automatically when the point of contact of electrodes with no force exerted and the specific shift value are input into the HMI of the controller 9. Then, a coordinate of the maximum opening of the welding gun 1 is set by inputting this coordinate, which can be limited by the maximum stroke of the electrode 3, into the controller 9 HMI. The coordinate may be determined by moving the electrode 3 in a direction away from the electrode 2 until the electrode 3 reaches its end position, or it may be determined from the properties of the welding gun 1. It is noted that it is possible to automatically determine limiting coordinates, such as by the controller 9, which moves the electrode 3 for opening and closing the welding gun until the moment the consumed current is exceeded or certain force values are reached. Then, the operator sets a maximum value of speeds (V₀) and (V₁) with the HMI of the controller 9, after which the configuration cycle is performed. The speed (V₀) value depends on the opening distance of the welding gun 1. For example, it is pointless to set the speed (V₀) to be equal to the maximum speed of the EMA for a small distance, since the EMA will not build up this speed within this distance. Therefore, the speed (V₀) value can be equal to the speed (V₁). The speed (V₀) can be automatically calculated by the controller 9 based on the distance the electrode 3 will have been moved and based on the acceleration of the electrode 3 speed increase and decrease.

Then, the configuration cycle is performed, wherein the electrode 3 is moved by the EMA toward the electrode 2, i.e., the welding gun 1 closes at the speed (V₀) which is preferably equal to the maximum speed of the EMA, and then, starting from a point (SV₁), at the speed (V₁), or the electrode 3 travels the entire welding gun 1 closing distance at the speed (V₁), if this distance is too small for reaching the speed (V₀).

After the speed is lowered in the point (SV₁), the electrodes 2 and 3 contact in the point (S_{cont}) (the actual point of contact of the electrodes 2 and 3 in the configuration cycle), after which the electrode 2 and 3 compression force is generated on the electrodes. The force on the electrodes increases until it reaches a target force (F_{trg}). When the electrodes 2 and 3 are compressed, the force value gradually reaches the value (F₁) (force at which the fluctuations related to the contact deformation of the electrodes stop) and (F₂) (force at which the target force (F_{trg}) is approached and the speed (V₁) begins to lower), until the target force (F_{trg}) is reached, wherein the electrodes move at the constant speed (V₁) in the portion before reaching the force (F₂).

In the configuration cycle, coordinates S(F₁), S(F₂) are determined for preset forces (F₁) and (F₂), accordingly. The force is controlled with the force sensor 8. The forces (F₁) and (F₂) are selected based on analyzing the force build-up beginning portion - the duration of force fluctuations - and a transition process portion when the target force (F_{trg}) is reached - the duration of approaching the force (F_{trg}). The force (F₁) should be greater than the force at which the force fluctuation caused by the contact of the electrodes 2 and 3 in the point (S_{cont1}) ends. The coordinate of the point (S_{cont1}) can be determined based on a signal of the position sensor 7 received by the controller 9 when the force on the electrode 3 begins to change. It is important for the force (F₁) to be also greater than the force at which a non-linear portion of the force change due to the electrode 3 movement, which portion is caused by a gap between the parts 14, ends. The force (F₂) is chosen so that there is a portion of movement at constant speed (V₁) between the coordinates S(F₁) and S(F₂). To obtain the first data for analysis, the cycle of compression of the welding gun 1 up to the force (F_{trg}) can be performed before setting the forces (F₁) and (F₂). The operator inputs the forces (F₁) and (F₂) into the controller 9. Based on the duration of the force fluctuations caused by the electrode 3 and the electrode 2 collision, and on the duration of approaching the target force (F_{trg}), the speed (V₁) is corrected relative to the speed set for the first compression, if such correction is required. The speed (V₁) is also chosen such that there is a linear portion at the electrode 3 and 2 compression step, which is free from force fluctuations, at which portion the coordinates S(F₁) and S(F₂) can be determined for the forces (F₁) and (F₂). Also, the speed (V₁) should be less that the speed at which the collision of the electrodes can cause the welding gun 1 or the EMA 5 to break down (for example, deformation of the electrodes 2 and 3). The higher the speed (V₁), the longer the force fluctuations decay after the electrode 3 touches the parts 14, and the sooner deceleration is required before reaching the target force (F_{trg}). It should be noted that the forces (F₁), (F₂) and speed (V₁) can be calculated automatically by the controller 9 based on the automatic analysis of the duration of force fluctuations and of approaching the target force (F_{trg}) by estimating successive force data and dispersing the latter relative to one another and relative to the target force.

Further, as a part of the configuration cycle, a linear function is determined, wherein the linear function represents a force change during the build-up of the parts compression force from the force (F₁) to the force (F₂) when the coordinate of the traveling electrode is changed from S(F₁) to S(F₂) (hereinafter - the linear function). It should be noted that the force data is received with a delay relative to the determination of the coordinate corresponding to this force, i.e., for example, data on the force (F₁) is actually received with a certain time shift (delay) relative to the moment when the data on the coordinate S(F₁) is received. At the portion of transition from the force (F₁) to the force (F₂), the electrode 3 moves with a constant speed (V₁) so that said shift is the same at both the point S(F₁) and the point S(F₂), which allows for lowering the linear function definition error. Linear extrapolation is performed on the linear function before intersecting the level of force (F_{trg}), i.e., a coordinate (S_{trg1}), which is the coordinate of reaching the target force (F_{trg}) in the configuration cycle, is determined. After the force (F₂), the electrode 3 moves with its speed being reduced to zero at reaching the target force (F_{trg}) (hereinafter - the force (F_{trg})). It is noted that the values of accelerations and decelerations of the electrode 3 are chosen such that undesirable dimensional fluctuations of the welding gun 1 and movable arms of the robot 11 are avoided. In order to minimize the duration of the compressive force build-up, it is important for the electrode 3 not to stop in the process of welding gun 1 compression up to the coordinate (S_{trg1}). After the force (F₂) is reached, the controller 9 performs linear extrapolation on the linear function until intersecting the zero force level, and the electrode contact point in the configuration cycle is assumed as a point (S_{base}) of intersection between the extrapolated linear function and the zero force level. For convenience, hereinafter the electrode contact point in the configuration cycle is referred to as (S_{base}). Then, the electrode 3 moves away from the electrode 2 to its initial position, i.e. the welding gun 1 opens.

In the first working cycle, a point from which the electrode 3 starts to move with the speed (V₁) is set by the controller 9 at a distance A from (S_{base}) (i.e. the value A is subtracted from the (S_{base}) coordinate). This point is called a point (S_{touch}) of touch (hereinafter - the point (S_{touch})) in a working welding cycle. The point (S_{touch}) is characterized as an extreme possible coordinate, where the speed of the electrodes can exceed the speed (V₁). The distance A between the points (S_{base}) and (S_{touch}) is set by the operator to be no less than the combined thickness of the parts 14 including tolerance. Additionally, a maximum gap between all parts 14 and tolerances for spatially arranging the parts 14 may be added to the distance A if it is needed to weld the parts 14 taking into account special aesthetic requirements, and it is needed to reduce the speed at which the electrode 3 contacts the parts 14 to avoid dents on the surface thereof. The parts arrangement tolerance should also be added to the distance A to prevent the electrode 3 from contacting the parts 14 at a speed that would damage them or damage the EMA 5 and/or the welding gun 1. It will prevent the electrodes 3 from collision with the parts 14 at a speed close to the maximum speed (V₀). Due to the deceleration of the electrode 3 to the speed (V₁) at the point (S_{touch}), the energy of the electrode 3 collision with the parts 14 can be reduced and damage to the latter is avoided. If it is possible to place more parts 14 than it is envisioned by the technological process for a specific welding cycle, to prevent the electrode 3 from colliding with the parts 14 at a speed close to the maximum speed (V₀), the distance between the points (S_{touch}) and (S_{base}) should be increased by the overall thickness of possible excessive parts 14. The operation of initial determination of the points (S_{base}), (S_{touch}), the forces (F₁) and (F₂) (welding gun 1 configuration) may be combined with welding gun 1 calibration to reduce labor intensity of the configuration. The welding gun 1 calibration usually includes determining a ratio between the force measured by the force sensor (not shown) located in the EMA 3 and the force measured by a calibration force sensor (not shown) located between the electrodes 2 and 3. The forces obtained from the force sensor and the calibration force sensor are fed to the controller 9. The rigidity of the force sensor is significantly greater than the rigidity of the welding gun 1 and, thus, it has little effect on the point (S_{base}) calculation accuracy. If the welding gun 1 configuration is combined with calibration thereof, the thickness of the force sensor should be subtracted from the distance A, i.e. the force sensor thickness should be added to the point (S_{touch}) taking into account the thickness of the parts, the gap, the position tolerance (if they need to be accounted for). To weld the parts 14, the robot 11 moves the welding gun 1 such that the electrode 3 touches the parts 14. In a first working cycle (shown in Fig. 4) the welding gun 1 is closed at the speed (V₀) which is chosen based on configured accelerations and decelerations and the stroke to the point (S_{touch}) where the movement with the speed (V₁) begins. The actual contact of the electrode 3 and one of the parts 14 (hereinafter referred to as the contact of the electrode 3 with the parts 14) takes place in the first working cycle at a speed from (V₁) to (V₀) in the (S_{cont2}) point. The coordinate of the (S_{cont2}) point may be determined in the same manner as the (S_{cont1}) point. The speed (V₀) in the first working cycle, as well as in the configuration cycle, may be equal to the maximum speed of the EMA 3 to reduce the welding cycle duration, and may be calculated automatically by the controller 9. Starting from the point (S_{touch}), the electrode 3 moves with the speed (V₁) up to the moment of reaching the force (F₂). Lowering the electrode 3 speed starts no sooner than the force (F₂) is reached. The linear function is determined in the same manner as in the configuration cycle, but it will be understood that new coordinates S(F₁)' and S(F₂)' are determined, since there are parts 14 located between the electrodes 2 and 3. According to the signal from the force sensor 8, the controllerr 9 checks if the force (F₁) is greater than the force at which the force fluctuations due to collision of the electrode 3 and the parts 12 occurs, and is greater than the force at which non-linear portion of the force change due to the electrode 3 position ends. If it is wrong, the force (F₁) increases, and S(F1)' coordinate is determined again. In the following welding cycles with the same part 14 thicknesses and (F_{trg}) force value, the force (F₁) remains unchanged. Linear extrapolation is performed on the linear function before its intersection with the level of force (F_{trg}), i.e., a coordinate (S_{trg2}) is determined ((S_{trg2}) is the coordinate of the electrode 3, where (F_{trg}) force is reached in the working cycle). The electrode 3 stops at the coordinate (S_{trg2}) corresponding to the force (F_{trg}). The point (S_{touch}) is calculated based on parameters S(F₁)', S(F₂)' that are determined at a portion where the electrode moves with the constant speed (V₁) after force fluctuations, which increases the accuracy of point (S_{touch}) calculation. Wherein the point (S_{touch}) calculation may be carried out by the controller 9 simultaneously with the welding process, and not prior thereto, therefore the change of the force (F₁) does not result in the increase in the welding cycle duration. It is noted that during the disclosed working welding cycle, the caps on the electrodes 2 and 3 are shortened due to material removal from their ends contacting with the parts 14 in the process of heating and pressing against the parts 14. In each welding cycle, the controller 9 calculates the point (S_{touch}) again and sets the coordinate of the point at which the electrode 3 starts to move with the speed (V₁) in the next welding cycle equal to the coordinate of calculated point (S_{touch}) , which reduces the duration of movement at a low speed and the duration of the welding cycle regardless of the length of the caps. It should be noted that the difference between the coordinates of the point (S_{touch}) in adjacent welding cycles includes not only the wear of the electrodes 2 and 3 caps, but also variation of thickness of the parts 14. However, after several cycles, for example, a number of cycles in which the average difference between the coordinates of the points (S_{touc}h) in these several configuration cycles and welding cycles exceeds the sheet thickness tolerance, the difference between the coordinates of the points (S_{touch}) in the current working cycle and the first working cycle may be indicative of the degree of the cap wear between them. It is important that, to account for wear, the coordinates of the point (S_{touch}) in the current welding cycle and in the first welding cycle be compared after configuration with the same nominal thickness of the parts 14. Said difference is recorded in the memory (such as EEPROM or flash memory) which can be arranged within the controller 9, for example, and the resulting value is compared by the controller 9 to the predetermined permissible cap wear value. When the predetermined wear value is reached, a signal is generated (by one of the control systems - of the EMA 5 or of the robot 11) about the necessity to restore the shape (the longitudinal section profile), for example, by sharpening, molding or replacing the caps. At the same time, the number of welding cycles until the cap shape needs to be restored can be predicted.

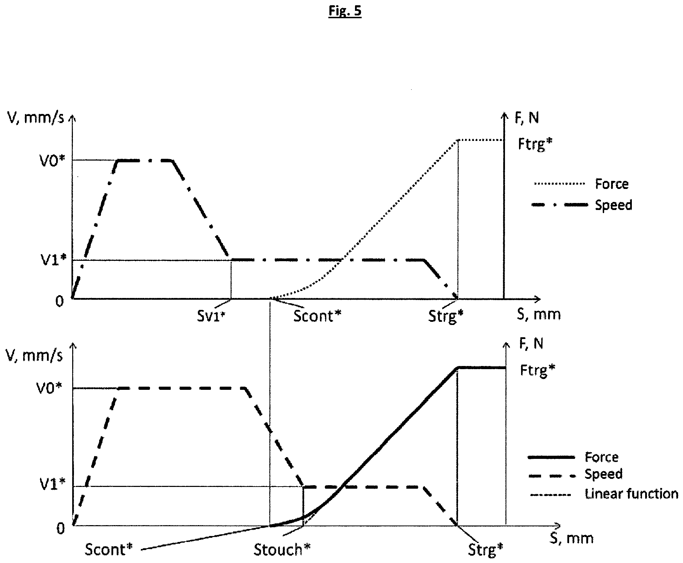

Fig. 5 shows graphs of welding cycles according to the claimed method (bottom) and according to the method known from the prior art (top), provided that the welding cycles are performed with the same equipment, i.e., the welding gun 1, the EMA 5 and the rest of the elements of the welding cell are unchanged. Accordingly, the force (F_{trg^{∗}}), the coordinate (S_{trg^{∗}}) corresponding to this force, the speeds (V_{0^{∗}}) and (V_{1^{∗}}) have the same values in both welding cycles. Thus, the difference in the distance the electrode 3 travels at the speed (V_{0^{∗}}) between the two methods is apparent. In the claimed method, by setting the point at which the movement with the speed (V_{1^{∗}}) begins at the point (S_{touch^{∗}}), the distance that the electrode 3 travels at the speed (V_{0^{∗}}) can be increased, which, evidently, reduces the duration of the welding cycle. Determining the point (S_{touch^{∗}}) through a linear function allows determining this point with high consistency and eliminates the need to lower the speed of the electrode 3 to the speed (V_{1^{∗}}) before the point (S_{touch^{∗}}) due to a low error in determining the point (_{Stouch^{∗}}) in comparison with the known methods.

It should be noted that the method is suitable for controlling a welding gun traveling electrode comprising an EMA, which can be any known form of an EMA construction. For example, it can be provided as a linear electric motor, the output link of which is a shaft. The shaft interacts with a magnetic field generated by a stator and moves translationally. Also, the EMA can be provided as a rotary EMA comprising an electric motor and a reductor, an input link of which is fixedly attached to the electric motor rotor, and to the output link of which an arm is fixedly attached, which arm functions as an EMA output link. A welding gun traveling electrode is attached to the output link of the EMA such that they cannot move relative to each other. The welding gun of such construction is disclosed in patent DE102011054376A1. In such welding gun configuration, when the EMA comprises an output link configured as an arm, a traveling electrode is fixed on an end of said arm. It is important to note that in such configuration, a torque sensor can be provided instead of a force sensor to determine the force on the traveling electrode.

## Claims

1. A method for adaptive control of a traveling electrode of a spot welding gun, the method comprising:
Providing a welding gun (1) comprising:
a pair of electrodes (2, 3) at least one of which is the traveling electrode (3);
a linear actuator (5) for the traveling electrode (3), the linear actuator (5) being arranged for linear movement of the traveling electrode (3) towards the another electrode (2) of the pair of electrodes;
a position sensor (7) arranged for sensing the position of the traveling electrode (3);
a force sensor (8) arranged for sensing a force acting on the traveling electrode (3);
input/output means for working parameters input;
a controller (9) configured for receiving data via the input/output means, as well as data from the position sensor (7) and the force sensor (8), for storing and processing said data and for outputting control signals for controlling the traveling electrode linear actuator (5);
Performing a cycle of the welding gun configuration, wherein the said cycle comprises:
Setting working parameters including the values of speed (V₀) of the traveling electrode (3) movement, and speed (V₁) of the traveling electrode (3) movement; first and second compressive forces (F₁, F₂) of the electrodes; target force (F_{trg}); a distance A, equal to the maximum thickness of the parts to be welded, including tolerance, wherein the second compressive force (F₂) is less than the target force (F_{trg}), at which welding of the parts to be welded is performed, and wherein the first compressive force (F₁) is greater than the force at which force fluctuation, caused by touching of the electrodes to each other, finishes;
Bringing the traveling electrode (3) to the other electrode (2) of the pair of electrodes (2, 3) at speed (V₁) without contacting the electrodes with each other;
Bringing the electrodes in contact with each other and further moving the electrodes towards each other to reach the first compressive force (F₁);
Building up the compressive force by moving the traveling electrode (3) at speed (V₁) until the second compressive force (F₂) is reached, after which the speed of movement of the traveling electrode is lowered;
Lowering the speed of movement of the traveling electrode until the target force (F_{trg}) is reached,
The method being **characterized in that:**
After the second compressive force (F₂) is reached, a coordinate of a base point (S_{base}) at which the electrodes touch each other is determined as a point of intersection of a linear function defining correspondence between the electrode compression force and the coordinate of the traveling electrode during the building-up of the force from the first compressive force (F₁) to the second compressive force (F₂), with the level of zero compressive force;
Wherein the method further comprises:
Working cycle of the welding gun compression, when the parts to be welded are positioned between the electrodes of the welding gun; the working cycle comprises:
Bringing the traveling electrode (3) to the parts to be welded at speed (V₀) without contacting the electrodes with the parts;
Lowering the speed of the traveling electrode movement from speed (V₀);
Bringing the traveling electrode (3) in contact with the nearest part to be welded;
Lowering the speed of the traveling electrode (3) movement to the preset speed (V₁) at the distance A from the base point (S_{base}) at which the electrodes touch each other;
Reaching the first compressive force (F₁);
Building up the part compression force with the movement of the traveling electrode at speed (V₁) to reach the second compressive force (F₂), after which the speed of the traveling electrode (3) movement is lowered;
Lowering the speed of the traveling electrode until the target force (F_{trg}) is reached;
After the second compressive force (F₂) is reached, a coordinate of a point (S_{touch}) at which the traveling electrode touches the part to be welded is determined as a point of intersection of a linear function defining correspondence between the parts compression force and the coordinate of the traveling electrode during the building-up of the force from the first compressive force (F₁) to the second compressive force (F₂), with the level of zero compression force, and
Setting a coordinate of the point at which the traveling electrode begins movement at speed (V₁) during the next working cycle of compression, the coordinate is being equal to the coordinate of the point (S_{touch}) at which the traveling electrode touches the part to be welded, determined during the performed working cycle of welding gun compression.

2. The method of claim 1, according to which
the cycle of the welding gun (1) configuration further comprises:
Determination of point of contact of the pair of electrodes (2, 3) before setting the working parameters, wherein prior to the contact of the electrodes (2, 3) to each other the method further comprises:
Determination of the point (SV₁) based on the data on the point at which the electrodes (2, 3) contacting each other, (SV₁) is the point at which the speed (V₀) of the traveling electrode (3) movement lowers to the speed (V₁) of the traveling electrode (3) movement;
Bringing the traveling electrode (3) to the other electrode (2) of the pair of electrodes (2, 3) at speed (V₀) without contacting of the electrodes (2, 3) with each other;
Lowering the speed of the traveling electrode (3) movement to speed (V₁).

3. The method of claim 1, according to which the distance A from the base point (S_{base}) at which the electrodes (2, 3) touch each other to the coordinate of the point of beginning the movement of the traveling electrode (3) at speed (V₁) further includes the distance equal to the maximum possible gap between the parts to be welded (14).

4. The method of claim 1, according to which the distance A from the base point (S_{base}) at which the electrodes (2, 3) touch each other to the coordinate of the point of beginning the movement of the traveling electrode (3) at speed (V₁) further includes the distance equal to maximum displacement of the parts to be welded (14) along the axis of the traveling electrode (3).

5. The method of claim 1, according to which the distance A from the base point (S_{base}) at which the electrodes (2, 3) touch each other to the coordinate of the point of beginning the movement of the traveling electrode (3) at speed (V₁) further includes the distance equal to maximum possible thickness of the parts to be welded (14), which are suitable for installation in the tooling (15) that holds the parts to be welded (14) during welding.

6. The method of claim 1, according to which the first compressive force (F₁) is corrected during the working cycle.

7. The method of claim 1, according to which the first compression force (F₁) and the second compression force (F₂) are preset during the welding gun (1) calibration.

8. The method of claim 1, according to which the speed (V₀) equals to the maximum speed of the welding gun traveling electrode linear actuator (5).

9. The method of claim 1, according to which the limiting value for the coordinate of the point (S_{touch}) at which the traveling electrode (3) touches the part to be welded (14) is set according to maximum permissible cap wear.

10. The method of any of claims 1 to 9, according to which the traveling electrode linear actuator (5) is implemented as an electromechanical actuator with a roller screw drive or a ball screw drive.

11. The method of any of claims 1 to 9, according to which the traveling electrode linear actuator (5) is implemented as a linear electric motor.

12. The method of any of claims 1 to 9, according to which the position sensor (7) is implemented as an encoder or resolver.

13. The method of claim 10 or claim 11, according to which the controller (9) is arranged in an electromechanical actuator.

14. The method of claim 1 or claim 2, according to which the welding gun comprises another force sensor (12) configured to sense the force arisen on the electrodes (2, 3).
